# EUROPEAN PATENT APPLICATION

(11) **EP 4 378 667 A1**
(43) Date of publication of application: **05.06.2024**
(21) Application number: 23213422.1
(22) Date of filing: 30.11.2023
(51) Int. Cl.: B29C 65/10, B29L 31/48, B29L 31/50

(54) **APPARATUS AND METHOD FOR TAPING FABRICS OR SIMILAR ARTICLES**

(30) Priority: 02.12.2022 IT 202200024927
(71) Applicant: MACPI S.p.A. PRESSING DIVISION, 25036 Palazzolo Sull'Oglio (Brescia) (IT)
(72) Inventor: CARTABBIA, Paolo, 25036 Palazzolo Sull'Oglio (BS) (IT)
(74) Representative: PGA S.p.A.

(57) **Abstract**

The present invention is relative to an apparatus for taping fabrics or similar articles, comprising: a nozzle (23), connected to an air source and pointing towards a layer of thermo-fusible material of a tape (2) to apply on a fabric or similar article (T), and heating devices operatively active upstream of the nozzle (23) to heat the air before it is emitted from the nozzle (23). An auxiliary nozzle (24) is located upstream of the nozzle (23) and is pointing towards the layer of thermo-fusible material of the tape (2). The auxiliary nozzle (24) is connected to the air source and the above-mentioned heating devices are operatively active upstream of the auxiliary nozzle (24) to heat the air before it is emitted by the auxiliary nozzle (24). The auxiliary nozzle (24) serves to preheat the layer of thermo-fusible material before it is heated, until it melts, from the nozzle (23).

## Description

### Field of the finding

The present invention has as its object an apparatus and a method for taping fabrics or similar articles.

As taping is intended, in the present description and in the attached claims, the application of a tape to fabrics or similar articles, for example to garments for functional purposes (for example for joining two flaps or for sealing) or decorative purposes.

As similar articles are intended, in the present description and in the attached claims, flexible elements manufactured with various methods, for example nonwoven fabric, and with different materials, both natural and synthetic.

The present invention finds application for example in the production of articles belonging to the following fields: clothing, underwear, shoes, accessories, furniture, medical, car industry (automotive).

### Background of the finding

In this field, apparatuses are known that are configured to apply a tape provided with a layer of thermo-fusible material to fabrics or similar articles.

A similar apparatus of known type comprises: a support frame, a reel holder mounted on the support frame and configured to carry a reel of a tape comprising a layer of thermo-fusible material, a first roller having a respective first lateral surface configured to receive and guide the tape while a side of the tape opposite the layer of thermo-fusible material rests against this first lateral surface, a second roller having a respective second lateral surface coupled to the first lateral surface of the first roller and configured to receive and guide a fabric or similar article. The first lateral surface and the second lateral surface are positioned and configured to allow the fabric or similar article and the tape to pass between them and to press the tape against the fabric or similar article. A nozzle is connected to an air source and is pointing towards the first roller and the layer of thermo-fusible material of the tape. Heating devices are operatively active upstream of the nozzle, with respect to a flow of air conveyed to said nozzle, to heat the air before it is emitted from the nozzle. A jet of hot air emitted from the nozzle causes the at least partial melting of the thermo-fusible material of the tape, which is then coupled to the fabric or similar article by means of the passage between the rollers so as to join the two elements following the subsequent polymerization of the thermo-fusible material.

In order to increase the taping speeds, are known apparatuses provided with a hot guide, for example a metal block heated by electric resistors, located just upstream of the first roller with respect to an advancing direction of the tape. The hot guide has the function to pre-heat the layer of thermo-fusible material of the tape before it reaches under the jet of hot air. This pre-heating in fact brings the thermo-fusible material close to its melting temperature, so that a minimum transit time under the jet of hot air is sufficient to cause it to melt. Such a machine is for example shown in document US2009199970A1 on behalf of the same Applicant.

It is also known the document DE3841580C1 which shows a device for the adhesive bonding of laminates for articles of clothing. Such a device comprises an upper roller and a lower roller between which are passed a material to be glued and an adhesive tape whose adhesive is activatable by heat. A hot air nozzle is pointing towards the upper roller and the adhesive tape. This nozzle has a main outlet for hot air and an additional outlet which, with respect to the direction of rotation of the upper roller and the movement of the adhesive tape, is located upstream of the main outlet. The additional outlet has the purpose of forming an air knife that delimits the jet of hot air leaving the main outlet.

### Summary

In this regard, the Applicant has observed that the solution adopted in the known technique for pre-heating the thermo-fusible material of the tape has defects and/or drawbacks.

The Applicant has first observed that the tape rests and slides against the hot guide with its own side opposite the layer of thermo-fusible material (otherwise the thermo-fusible material would be deposited on the guide, making the apparatus unusable in a short time). Thus, heat is transmitted first to the tape and only afterwards, by conduction, to the layer of thermo-fusible material. It is therefore necessary to use temperatures higher than necessary to heat the thermo-fusible material to the desired temperature and this leads to higher consumptions and can damage the tape (the tape shrinks and/or the edges curl up).

The Applicant has also observed that, if the operator during the use of the apparatus stops for any reason and leaves the tape on the hot guide, the portion of the tape resting on that hot guide heats up so much that it "cooks" and that portion of tape will then have different adhesion characteristics to the fabric than the remaining tape. To avoid such a drawback, the operator would have to remove and replace the tape each time, compromising productivity and/or increasing production costs.

The Applicant has also observed that, being the guide usually mounted on a cutting unit of the tape, the scissors and other components get dirty very often because they engage with the tape when the thermo-fusible material is no longer cold and solid. It is therefore necessary to clean the scissors and such other components with a certain frequency and to do so it is necessary to stop the apparatus and thus the production.

In this regard, the Applicant has therefore set itself the target of improving apparatuses for taping fabrics or similar articles and improving the quality of manufactured products using such apparatuses.

The Applicant has also set itself the target of realizing an apparatus that is more energy efficient and easier to maintain.

The Applicant has also set itself the target of increasing taping speeds.

The Applicant has also set itself the target of being able to apply textile tapes that cannot nowadays be used with apparatuses of known type.

The Applicant has found that the indicated target and at least one of the above-mentioned purposes and others can be achieved by using an auxiliary jet of hot air for pre-heating the thermo-fusible material of the tape.

The Applicant has in particular found that the indicated target and at least one of the above-mentioned purposes and others are substantially achieved by an apparatus and a method for taping fabrics or similar articles according to one or more of the attached claims and/or according to one or more of the following aspects.

In particular, according to a first aspect, the present invention refers to an apparatus for taping fabrics or similar articles, comprising:
a support frame;
a reel holder mounted on the support frame and configured to carry a reel of a tape comprising a layer of thermo-fusible material;
a first roller having a respective first lateral surface configured to receive and guide the tape while a side of the tape opposite the layer of thermo-fusible material rests against said first lateral surface;
a second roller having a respective second lateral surface coupled to the first lateral surface of the first roller and configured to receive and guide a fabric or similar article; wherein the first lateral surface and the second lateral surface are positioned and configured to allow the fabric or similar article and the tape between them and to press the tape against the fabric or similar article;
at least one motor connected to at least one of the first roller and the second roller and configured to rotate the first roller and/or the second roller;
a nozzle connected to an air source and pointing towards the first roller and the layer of thermo-fusible material of the tape;
heating devices operatively active upstream of the nozzle, with respect to a flow of air conveyed to said nozzle, to heat the air before it is emitted from the nozzle;
wherein the apparatus further comprises an auxiliary nozzle located upstream of the nozzle, with respect to an advancing direction of the first lateral surface and of the tape, and pointing towards the first roller and the layer of thermo-fusible material of the tape; wherein the auxiliary nozzle is connected to the air source or to an auxiliary air source; wherein said heating devices or auxiliary heating devices are operatively active upstream of the auxiliary nozzle, with respect to a flow of air conveyed to said auxiliary nozzle, to heat the air before it is emitted from the auxiliary nozzle.

According to a second aspect, the present invention relates to a method for taping fabrics or similar articles by means of the apparatus of the first aspect or of at least one of the aspects that will follow.

This method comprises:
▪ dragging the tape and said fabric or similar article between the first roller and the second roller by means of the rotation of at least one between the first roller and the second roller;
▪ heating the thermo-fusible material until it melts by a jet of hot air from the nozzle;
▪ coupling the tape to the fabric or similar article by adhering the layer of thermo-fusible material to the fabric or similar article while said tape and
said fabric or similar article pass between first roller and the second roller; wherein, before heating the thermo-fusible material until it melts, the layer of thermo-fusible material is pre-heated by a jet of hot air emitted from the auxiliary nozzle.

The hot air emitted from the auxiliary nozzle has the function to pre-heat the layer of thermo-fusible material of the tape before it reaches under the jet of hot air of the nozzle. The auxiliary nozzle is then configured to pre-heat the layer of thermo-fusible material through the respective jet of hot air. This pre-heating brings the thermo-fusible material close to its melting temperature, so that a minimum transit time under the jet of hot air is sufficient to cause it to melt. Then, the tape is coupled to the fabric or similar article by adhering the layer of thermo-fusible material to the fabric or similar article while said fabric tape or similar article pass between the first roller and the second roller. By cooling immediately afterwards, the thermo-fusible material polymerizes, determining a stable bond of the tape with the fabric or similar article.

The Applicant has verified that the use of hot air for pre-heating the thermo-fusible material of the tape allows to overcome the above-mentioned drawbacks and thus achieve the intended targets.

In fact, the blowing of the auxiliary nozzle addressed directly onto the thermo-fusible material allows to supply calories to said material without wasting energy, unnecessarily heating elements of the apparatus and of the tape, and without risking to ruin the tape itself.

In this way, it is possible to obtain an energy saving and an improvement of the qualities of the manufactured product. In addition, the apparatus is easier to clean and maintain.

The Applicant has verified that the use of hot air for pre-heating the thermo-fusible material of the tape allows to increase the taping speed.

The Applicant has verified that the use of hot air for pre-heating the thermo-fusible material of the tape allows to make the apparatus more flexible. For example, the flow rate of hot air emitted from the auxiliary nozzle (and with it the calories supplied per time unit to the thermo-fusible material) can be easily regulated according to the characteristics of the tape and of the thermo-fusible material, so as to allow the application of tapes that cannot nowadays be used with the apparatuses of known type.

The jet of hot air from the auxiliary nozzle, as well as the one of the nozzle, can also be interrupted if the operator has to stop and this allows to avoid overheating and damaging the tape lying still in the apparatus.

Further aspects of the invention are listed below.

In an aspect, the tape comprises a support (for example textile) upon which is positioned the layer of thermo-fusible material.

In an aspect, a valve is operatively located between the air source and the nozzle and an auxiliary valve is operatively located between the air source or the auxiliary air source and the auxiliary nozzle for independently controlling a flow rate of the air emitted from the nozzle and a flow rate of the air emitted from the auxiliary nozzle.

In an aspect, the valve and the auxiliary valve are proportional valves.

In an aspect, the valve is configured to regulate the flow rate of air emitted from the nozzle between 0 and 0.023 m³/s.

In an aspect, the auxiliary valve is configured to regulate the flow rate of air emitted from the auxiliary nozzle between 0 and 0.013 m³/s.

In an aspect, said heating devices are configured both to heat the flow of air conveyed towards the nozzle and to heat the flow of air conveyed towards the auxiliary nozzle.

In an aspect, a first path of the flow of air conveyed towards the auxiliary nozzle is further away from said heating devices with respect to a second path of the flow of air conveyed towards the nozzle.

In this way, the calories that are not absorbed by the flow of air conveyed towards the nozzle are not lost, but are at least partly used to heat the flow of air conveyed towards the auxiliary nozzle.

Furthermore, the flow of air conveyed towards the auxiliary nozzle is heated less than the flow of air conveyed towards the nozzle. The power absorbed by the apparatus according to the invention can also remain the same as for an apparatus not provided with auxiliary nozzle.

In an aspect, the heating devices comprise an electrical resistor.

In an aspect, the electrical resistor has an elongated shape.

In an aspect, the electrical resistor is a cartridge resistor.

In an aspect, the first airflow path is coiled around the elongated electrical resistor. In an aspect, the second airflow path is coiled around the first airflow path.

In an aspect, the apparatus comprises an elongate body mounted on the support frame, wherein the elongated electrical resistor is housed in the elongate body.

In an aspect, the elongate body is tubular.

In an aspect, the first airflow path is formed in the elongate body and arranged around the elongated electrical resistor.

In an aspect, the first airflow path is defined by passages obtained in a cylindrical body housed between the elongated electrical resistor and the elongate body.

In an aspect, the second airflow path is defined by a tube coiled around the elongate body.

In an aspect, the tube is wrapped in juxtaposed coils around the elongate body.

In an aspect, a head is mounted at one end of the elongate body, wherein the head has the nozzle and the auxiliary nozzle connected respectively to the first airflow path and the tube.

In an aspect, the nozzle and the auxiliary nozzle are defined respectively by a slit and by an auxiliary slit side by side and obtained on the head.

In an aspect, the head has an inner chamber in fluid communication with the first airflow path and open outwards through the slit.

In an aspect, the head has an inner auxiliary chamber in fluid communication with the second airflow path and open outwards through the auxiliary slit.

In an aspect, a volume of the inner chamber is between 50 and 3600 mm³.

In an aspect, a volume of the inner auxiliary chamber is between 20 and 750 mm³. The chambers serve to uniform the amount of air over the entire width of the respective blowing.

In an aspect, a distance between the slit and the first lateral surface of the first roller is between 1 and 7 mm.

In an aspect, heating devices are configured to heat the air emitted from the nozzle to a temperature of between 20°C and 600°C.

In an aspect, heating devices are configured to heat the air emitted from the auxiliary nozzle to a temperature of between 20°C and 600°C.

In an aspect, the apparatus comprises a hot air unit which in its turn comprises: the nozzle, the auxiliary nozzle, the heating devices the eventual auxiliary heating devices.

In an aspect, the hot air unit further comprises the valve and the auxiliary valve.

In an aspect, the hot air unit further comprises the elongate body and the head.

In an aspect, the apparatus comprises a control unit operatively connected to the heating devices, to said at least one motor, to the valve and to the auxiliary valve.

In an aspect, said control unit is configured to control and/or regulate and/or vary the temperature and/or the flow rate of the air emitted from the nozzle.

In an aspect, said control unit is configured to control and/or regulate and/or vary the temperature and/or the flow rate of the air emitted from the auxiliary nozzle.

In an aspect, said control unit is configured to control and/or regulate and/or vary speeds of the first roller and/or of the second roller.

In an aspect, the apparatus comprises control elements actuatable by an operator (for example, pedals or buttons or knobs) and operatively connected to the control unit and/or the heating devices, to said at least one motor, to the valve and to the auxiliary valve, to control the operation of said apparatus.

In an aspect, the support frame comprises a base for ground resting and a workbench mounted on the base.

In an aspect, the reel holder, the first roller, the second roller, the nozzle and the auxiliary nozzle are mounted on the workbench.

In an aspect, said at least one motor is connected both to the first roller and to the second roller.

In an aspect, said at least one motor comprises one motor operatively connected to the first roller and one motor operatively connected to the second roller.

In an aspect, the two motors are independent and can rotate, possibly, at different programmable speeds.

Further features and advantages will appear more clearly from the detailed description of a preferred, but not exclusive, embodiment of an apparatus for taping fabrics or similar articles according to the present invention.

### Description of figures

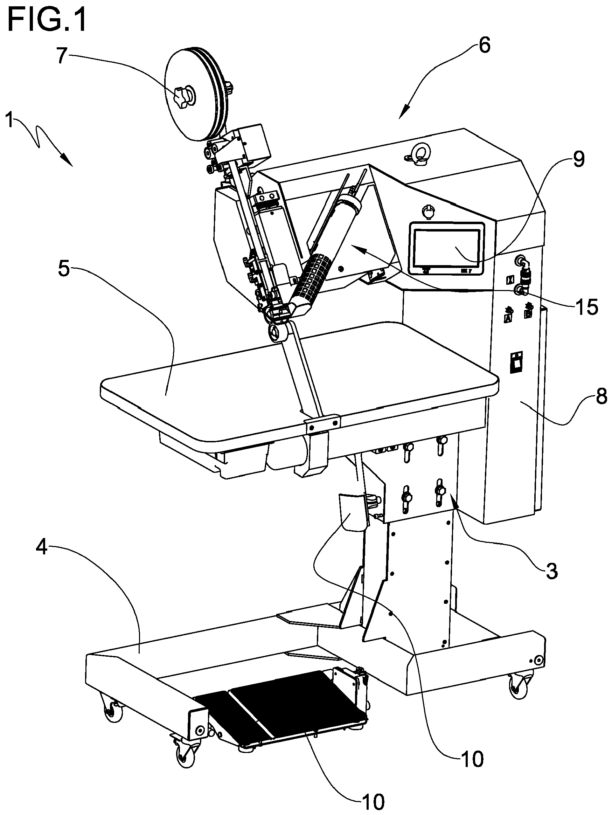

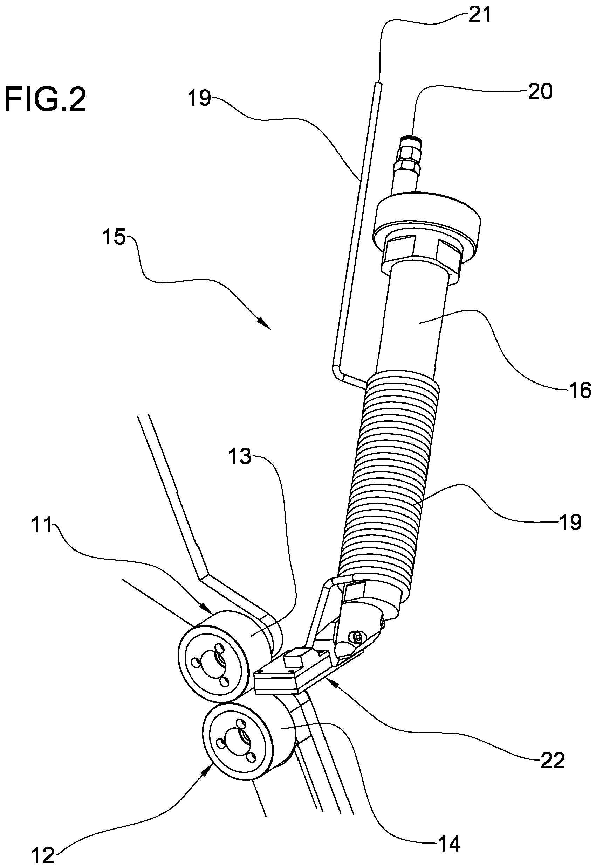

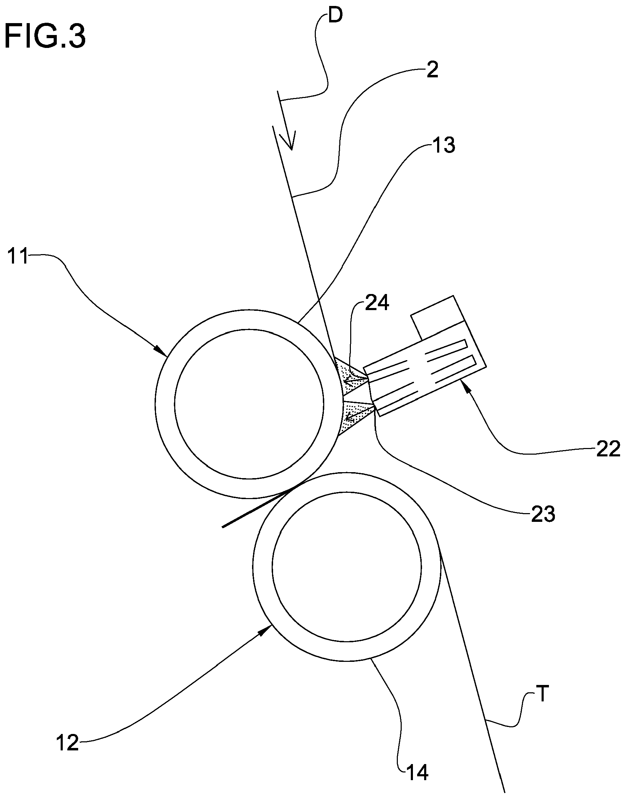

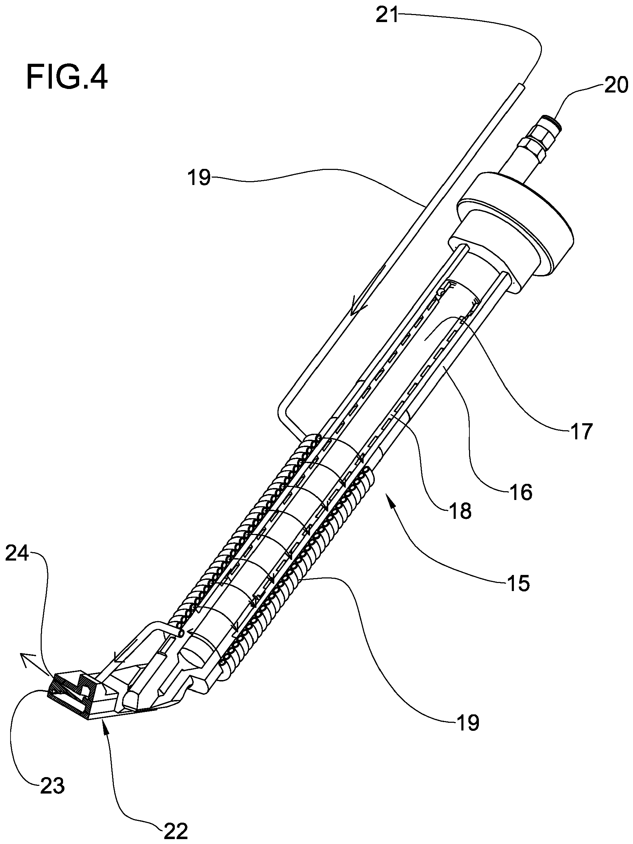

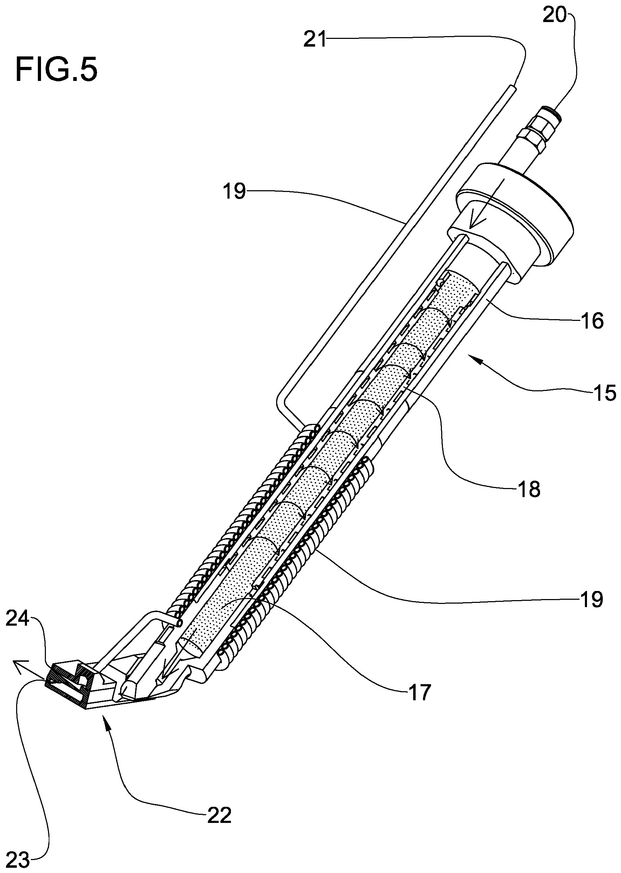

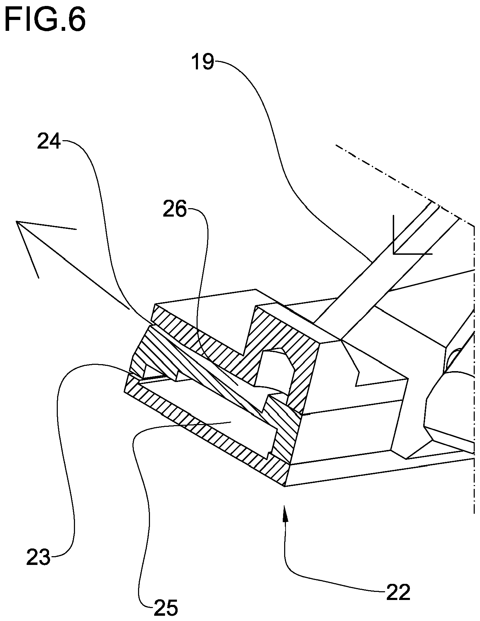

This description will be presented below with reference to the attached figures, provided for illustrative purposes only and, therefore, not limiting, in which:
▪ figure 1 shows an apparatus for taping fabrics or similar articles according to the the present invention;
▪ figure 2 shows an enlarged portion of the apparatus of figure 1;
▪ figure 3 shows a detail of the enlarged portion of figure 2;
▪ figures 4 and 5 show a partially sectioned element of the portion of figure 2; and
▪ figure 6 shows an enlarged portion of figures 4 and 5.

### Detailed description of an embodiment of the invention

With reference to figure 1, with 1 it has been overall indicated an apparatus for taping fabrics or similar articles according to the present invention. The apparatus 1 is configured to apply a tape 2 to a flexible element, for example in fabric or nonwoven, within the production of articles belonging, for example, to the following fields: clothing, underwear, shoes, accessories, furniture, medical, automotive. The tape 2 comprises a support (for example textile or of other material) upon which it is positioned a layer of thermo-fusible material. The thermo-fusible material is for example of the polyurethane-based type with a melting point ranging between 50°C and 200°C.

The apparatus 1 comprises a support frame 3 provided with a base 4 for ground resting and a workbench 5 mounted on the base 4. The support frame 3 is further provided with an upper portion 6 which extends above the workbench 5 and which supports a reel holder 7 configured to carry a reel of the above-mentioned tape 2 comprising the layer of thermo-fusible material and a working group mounted in lower position with respect to the reel holder 7 and above the workbench 5.

The upper portion 6 further comprises a control unit, not visible in figures, for example of electronic type, with suitable control systems housed in a suitable cabinet 8 and connected to a display 9. The apparatus 1 comprises control elements 10 actuatable by an operator (for example, pedals or buttons or knobs) and operatively connected to the control unit. The apparatus 1 is then controlled by the operator to carry out a method for taping fabrics or similar articles according to the present invention.

The working group comprises a pair of rollers or motorized wheel/s having own lateral surfaces facing each other. In particular, the pair of rollers comprises a first roller 11 or upper roller mounted on a bracket connected to the above-mentioned upper portion 6 so as to rotate around its own axis of rotation. The pair of rollers comprises a second roller 12 or lower roller mounted on a lower support developing from the workbench 5 so as to rotate around an its own axis of rotation. One motor, not shown, is operatively connected to the first roller 11 and one motor is operatively connected to the second roller 12 to cause them to rotate around their respective axes of rotation. The two motors are independent and can rotate at different programmable speeds so as to rotate the first roller 11 and the second roller at different speeds.

The axis of rotation of the first roller 11 and the axis of rotation of the second roller 12 are parallel to each other and a first lateral surface 13 of the first roller 11 is facing a second lateral surface 14 of the second roller 12. The first lateral surface 13 and the second lateral surface 14 are arranged at a minimum distance or are coupled to allow the tape 2 and the fabric T or similar article to pass between them to be joined together.

The first lateral surface of the first roller 11 is positioned and configured to receive and guide the tape 2 which comes from the reel mounted on the reel holder 7. The tape, as it arrives on the first roller 11, rests against the first lateral surface 13 partially coiling around said first roller 11 and then moving between the first roller 11 and the second roller 12 (figure 3). A side of the support of the tape 2 opposite the side which carries the layer of thermo-fusible material rests against the first lateral surface 11, while the layer of thermo-fusible material rests pointing outwards.

The second lateral surface 14 of the second roller 12 is positioned and configured to receive and guide the fabric T or similar article manually addressed by the operator. The fabric T or similar article, as it arrives on the second roller 12, rests against the second lateral surface 14 partially coiling around said second roller 12 then passing between the first roller 11 and the second roller 12 (figure 3).

The first roller 11 and the second roller 12 pair and press the one against the other the tape 2 and the fabric T or similar article while passing between the first and the second lateral surface 13, 14. In particular, the layer of thermo-fusible material of the tape 2 rests against the fabric T or similar article and is pressed against the latter.

The working group can comprise a cutting unit which serves to cut the tape 2. The working group further comprises a hot air unit 15 which has the function of heating the layer of thermo-fusible material of the tape 2 before this layer of thermo-fusible material is paired to the fabric T or similar article.

The hot air unit 15 comprises a tubular elongate body 16 within which it is housed an electrical resistor 17 of elongated shape of the cartridge type. A cylindrical body 18 coaxial to the tubular elongate body 16 and to the electrical resistor 17 of elongated shape is housed between the above-mentioned electrical resistor 17 of elongated shape and the above-mentioned elongate body 16 and has passages such as to delimit a first airflow path. The first airflow path is then arranged around the electrical resistor 17 of elongated shape and develops in a helical manner around said electrical resistor 17.

A tube 19 is coiled in side-by-side coils around the elongate body 16 and delimits a second airflow path.

The electrical resistor 17 defines heating devices operatively active upstream of the nozzle 23 and of the auxiliary nozzle 24. The electrical resistor 17 is then arranged and configured both to heat the flow of air conveyed towards the nozzle 23 and to heat the flow of air conveyed towards the auxiliary nozzle 24.

The first airflow path is connected to a first inlet 20 arranged at a proximal end of the elongate body 16. The first inlet 20 is in fluid communication with an air source under pressure, for example a compressor. The second airflow path, i.e. the tube 19, is connected to a second inlet 21 arranged at the proximal end of the elongate body 16. Also the second inlet 21 is in fluid communication with an air source under pressure, for example a compressor, which can be the same air source connected to the first inlet 20.

In figure 4 it is highlighted the second airflow path. In figure 5 it is highlighted the first airflow path.

At a distal end of the elongate body 16 is mounted a head 22 which has a nozzle 23 and an auxiliary nozzle 24 connected to the first airflow path and to the second airflow path, i.e. to the tube 19 respectively. As better visible in figure 6, the head 22 has an inner chamber 25 in fluid communication with the first airflow path and open outwards through a slit defining said nozzle 23. The head 22 further has an inner auxiliary chamber 26 in fluid communication with the second airflow path, i.e. with the tube 19, and open outwards through an auxiliary slit defining said auxiliary nozzle 24. The slit and the auxiliary slit develop parallel to each other and are arranged side by side on the head 22. A volume of the inner chamber is between 50 and 3600 mm³ and a volume of the inner auxiliary chamber is between 20 and 750 mm³. The function of these chambers is to adjust the amount of air over the entire width of the blowing emitted through the respective slits.

As better visible in figure 3, the nozzle 23 and the auxiliary nozzle 24 are arranged in front of the first lateral surface 13 of the first roller 11 and are pointing towards said first lateral surface 13. When the tape 2 is correctly located on the first roller 11, the nozzle 23 and the auxiliary nozzle 24 are pointing towards the layer of thermo-fusible material of the tape 2. With respect to an advancing direction "D" of the tape 2, which corresponds to an advancing direction of the first lateral surface 13 of the first roller 11 in the zone coupled to the tape 2, the auxiliary nozzle 24 is located upwards of the nozzle 23. A distance between the nozzle 23 or the auxiliary nozzle 24 and the first lateral surface 13 is for example between 1 mm and 7 mm.

A proportional valve, not shown in the drawings, is operatively located between the air source and the nozzle 23 and an auxiliary proportional valve, not shown in the drawings, is operatively located between the air source (or the auxiliary air source) and the auxiliary nozzle 24 for independently controlling and/or regulating a flow rate of the air emitted from the nozzle 23 and a flow rate of the air emitted from the auxiliary nozzle 24.

Furthermore, to this end, the control unit is operatively connected to the valve, to the auxiliary valve, to the motors, to the electrical resistor 17 and to the control elements 10, to allow the operator to control the functioning of the apparatus 1, for example to control and/or regulate and/or vary the temperature and/or the flow rate of the air emitted from the nozzle 23, the temperature and/or the flow rate of the air emitted from the auxiliary nozzle 24 and the speed of the first roller 11 and/or of the second roller 12.

For example, the valve 23 is configured to regulate the flow rate of the air emitted from the nozzle between 0 m³/s and 0.023 m³/s and the auxiliary valve 24 is configured to regulate the flow rate of the air emitted from the auxiliary nozzle between 0 m³/s and 0.013 m³/s.

For example, the electrical resistor 17 is configured to heat the air emitted from the nozzle 23 to a temperature of between 20°C to 600°C and to heat the air emitted from the auxiliary nozzle to a temperature of between 20°C to 600°C.

The function of the hot air emitted from the auxiliary nozzle 24 is to pre-heat the layer of thermo-fusible material of the tape 2 which immediately thereafter is melted, at least partially, by the hotter air emitted from the nozzle 23. In this melted or partially melted state the layer of thermo-fusible material is applied and pressed against the fabric or similar article while the tape 2 and this fabric or similar article pass between the first roller 11 and the second roller 12.

More in particular, in use and according to the method of the present invention, the tape 2 and said fabric or similar article are dragged between the first roller 11 and the second roller 12 by means of their rotation. The jet of hot air emitted from the auxiliary nozzle 24 provides to preheat the layer of thermo-fusible material for bringing it close to the respective melting temperature. Subsequently, the thermo-fusible material of the tape 2, already close to its own melting temperature, is struck by the jet of hot air emitted from the nozzle 23 which determines its melting. Therefore, the tape 2 is coupled to the fabric or similar article by adhering the layer of thermo-fusible material to the fabric or similar article while said fabric tape or similar article pass between the first roller 11 and the second roller 12. By cooling immediately afterwards, the thermo-fusible material polymerizes, determining a stable bond of the tape 2 with the fabric or similar article.

### List of elements

- 1: apparatus
- 2: tape
- 3: support frame
- 4: base
- 5: workbench
- 6: upper portion
- 7: reel holder
- 8: cabinet
- 9: display
- 10: control elements
- 11: first roller
- 12: second roller
- 13: first lateral surface
- 14: second lateral surface
- 15: hot air unit
- 16: elongate body
- 17: electrical resistor
- 18: cylindrical body
- 19: tube
- 20: first inlet
- 21: second inlet
- 22: head
- 23: nozzle
- 24: auxiliary nozzle
- 25: inner chamber
- 26: auxiliary inner chamber
- T: fabric or similar article
- D: advancing direction

## Claims

1. Apparatus for taping fabrics or similar articles, comprising:
a support frame (3);
a reel holder (7) mounted on the support frame (3) and configured to carry a reel of a tape (2), wherein the tape (2) comprises a layer of thermo-fusible material;
a first roller (11) having a respective first lateral surface (13) configured to receive and guide the tape (2) while one side of the tape (2) opposite the layer of thermo-fusible material rests against said first lateral surface (13);
a second roller (12) having a respective second lateral surface (14) coupled to the first lateral surface (13) of the first roller (11) and configured to receive and guide a fabric or similar article (T); wherein the first lateral surface (13) and the second lateral surface (14) are positioned and configured to allow the fabric or similar article (T) and the tape (2) to pass between them and to press the tape (2) against the fabric or similar article (T);
at least one motor connected to at least one of the first roller (11) and the second roller (12) and configured to rotate the first roller (11) and/or the second roller (12);
a nozzle (23) connected to an air source and pointing towards the first roller (11) and the layer of thermo-fusible material of the tape (2);
heating devices operatively active upstream of the nozzle (23), with respect to a flow of air conveyed to said nozzle (23), to heat the air before it is emitted from the nozzle (23);
wherein the apparatus (1) further comprises an auxiliary nozzle (24) located upstream of the nozzle (23), with respect to an advancing direction of the first lateral surface (13) and of the tape (2), and directed towards the first roller (11) and towards the layer of thermo-fusible material of the tape (2); wherein the auxiliary nozzle (24) is connected to the air source or to an auxiliary air source;
wherein said heating devices or auxiliary heating devices are operatively active upstream of the auxiliary nozzle (24), with respect to a flow of air conveyed towards said auxiliary nozzle (24), to heat the air before it is emitted from the auxiliary nozzle (24), so as to pre-heat the layer of thermo-fusible material through a jet of hot air emitted from the auxiliary nozzle (24).

2. Apparatus according to claim 1, comprising a valve operatively located between the air source and the nozzle (23) and an auxiliary valve operatively located between the air source or the auxiliary air source and the auxiliary nozzle (24) for independently controlling a flow rate of the air emitted from the nozzle (23) and a flow rate of the air emitted from the auxiliary nozzle (24).

3. Apparatus according to claim 2, wherein the valve is configured to regulate the flow rate of air emitted from the nozzle (23) between 0 and 0.023 m³/s and wherein the auxiliary valve is configured to regulate the flow rate of air emitted from the auxiliary nozzle (24) between 0 and 0.013 m³/s.

4. Apparatus according to any one of claims 1 to 3, wherein said heating devices are configured both to heat the flow of air conveyed towards the nozzle (23) and to heat the flow of air conveyed towards the auxiliary nozzle (24); wherein a first path of the flow of air conveyed towards the auxiliary nozzle (24) is further away from said heating devices with respect to a second path of the flow of air conveyed towards the nozzle (23).

5. Apparatus according to claim 4, wherein the heating devices comprise an elongated electrical resistor (17); wherein the first airflow path is coiled around the elongated electrical resistor (17); wherein the second airflow path is coiled around the first airflow path.

6. Apparatus according to claim 5, comprising:
an elongate body (16) mounted on the support frame (3), wherein the elongated electrical resistor (17) is housed in the elongate body (16), wherein the first airflow path is formed in the elongate body (16) and arranged around the elongated electrical resistor (17), wherein the second airflow path is defined by a tube (19) coiled around the elongate body (16);
a head (22) mounted at one end of the elongate body (16), wherein the head (22) has the nozzle (23) and the auxiliary nozzle (24) connected to the first airflow path and to the tube (19) respectively.

7. Apparatus according to claim 6, wherein the nozzle (23) and the auxiliary nozzle (24) are respectively defined by a slit and by an auxiliary slit side by side and fashioned on the head (22).

8. Apparatus according to any one of claims 1 to 7, wherein the heating devices are configured to heat the air emitted from the nozzle (23) to a temperature of between 20°C to 600°C and are configured to heat the air emitted from the auxiliary nozzle (24) to a temperature of between 20°C to 600°C.

9. Apparatus according to claim 2 or 3 or according to claim 4 or 5 when dependent on claim 2 or 3, comprising a control unit operatively connected to the heating devices, to said at least one motor, to the valve and to the auxiliary valve; wherein said control unit is configured to control the temperature and/or the flow rate of the air emitted from the nozzle (23), the temperature and/or the flow rate of the air emitted from the auxiliary nozzle (24) and speeds of the first roller (11) and/or of the second roller (12).

10. Method for taping fabrics or similar articles by means of an apparatus for taping fabrics or similar articles, the apparatus comprising:
a support frame (3);
a reel holder (7) mounted on the support frame (3) and configured to carry a reel of a tape (2), wherein the tape (2) comprises a layer of thermo-fusible material;
a first roller (11) having a respective first lateral surface (13) configured to receive and guide the tape (2) while one side of the tape (2) opposite the layer of thermo-fusible material rests against said first lateral surface (13);
a second roller (12) having a respective second lateral surface (14) coupled to the first lateral surface (13) of the first roller (11) and configured to receive and guide a fabric or similar article (T); wherein the first lateral surface (13) and the second lateral surface (14) are positioned and configured to allow the fabric or similar article (T) and the tape (2) to pass between them and to press the tape (2) against the fabric or similar article (T);
at least one motor connected to at least one of the first roller (11) and the second roller (12) and configured to rotate the first roller (11) and/or the second roller (12);
a nozzle (23) connected to an air source and pointing towards the first roller (11) and the layer of thermo-fusible material of the tape (2);
heating devices operatively active upstream of the nozzle (23), with respect to a flow of air conveyed to said nozzle (23), to heat the air before it is emitted from the nozzle (23);
wherein the apparatus (1) further comprises an auxiliary nozzle (24) located upstream of the nozzle (23), with respect to an advancing direction of the first lateral surface (13) and of the tape (2), and pointing towards the first roller (11) and towards the layer of thermo-fusible material of the tape (2); wherein the auxiliary nozzle (24) is connected to the air source or to an auxiliary air source;
wherein said heating devices or auxiliary heating devices are operatively active upstream of the auxiliary nozzle (24), with respect to a flow of air conveyed to said auxiliary nozzle (24), to heat the air before it is emitted from the auxiliary nozzle (24);
wherein the method comprises:
▪ dragging the tape (2) and said fabric or similar article (T) between the first roller (11) and the second roller (12) by means of the rotation of at least one between the first roller (11) and the second roller (12);
▪ heating the thermo-fusible material until it melts by a jet of hot air from the nozzle (23);
▪ coupling the tape (2) to the fabric or similar article (T) by adhering the layer of thermo-fusible material to the fabric or similar article (T) while said tape (2) and said fabric or similar article (T) pass between the first roller (11) and the second roller (12);
wherein, before heating the thermo-fusible material until it melts, the layer of thermo-fusible material is pre-heated by a jet of hot air emitted from the auxiliary nozzle (24).

11. Method according to claim 10, wherein the flow of air conveyed towards the auxiliary nozzle (24) is heated less than the flow of air conveyed towards the nozzle (23).

12. Method according to claim 10 or 11, comprising: independently controlling a flow rate of the air emitted from the nozzle (23) and a flow rate of the air emitted from the auxiliary nozzle (24) by a valve operatively located between the air source and the nozzle (23) and an auxiliary valve operatively located between the air source or the auxiliary air source and the auxiliary nozzle (24).

13. Method according to any one of claims 10 to 12, comprising: regulating a flow rate of hot air emitted from the auxiliary nozzle (24) depending on the characteristics of the tape (2) and of the thermo-fusible material.

14. Method according to any one of claims 10 to 13, wherein the heating devices are configured both to heat the flow of air conveyed towards the nozzle (23) and to heat the flow of air conveyed towards the auxiliary nozzle (24); wherein a first path of the flow of air conveyed towards the auxiliary nozzle (24) is further away from said heating devices with respect to a second path of the flow of air conveyed towards the nozzle (23); wherein the method comprises: using at least part of calories not absorbed by the flow of air conveyed towards the nozzle (23) to heat the flow of air conveyed towards the auxiliary nozzle (24).

15. Method according to any one of claims 10 to 14, wherein the tape comprises a support, optionally textile; the layer of thermo-fusible material being positioned on said support.
